# EUROPEAN PATENT APPLICATION

(11) **EP 4 769 493 A1**
(43) Date of publication of application: **01.07.2026**
(21) Application number: 25222991.9
(22) Date of filing: 12.12.2025
(51) Int. Cl.: H01M 4/04, H01M 4/62

(54) **METHOD OF KNEADING ELECTRODE MIXTURE, AND METHOD OF MANUFACTURING DRY ELECTRODE FILM AND DRY ELECTRODE INCLUDING THE SAME**

(30) Priority: 26.12.2024 KR 20240196834
(71) Applicant: SAMSUNG SDI CO., LTD., Yongin-si, Gyeonggi-do 17084 (KR)
(72) Inventor: YOO, Chi Jong, 16678 Suwon-si (KR); LEE, Jin Hyon, 16678 Suwon-si (KR); HAM, Young Geun, 16678 Suwon-si (KR); CHOI, Seong Jun, 16678 Suwon-si (KR)
(74) Representative: Marks & Clerk LLP

(57) **Abstract**

A method of kneading an electrode mixture capable of controlling the fiberization state of a binder to improve the characteristics of a dry electrode film, and a method of manufacturing a dry electrode film and a dry electrode including the same are provided. The method of kneading an electrode mixture includes performing a kneading process on the electrode mixture, obtaining a processed image of the electrode mixture on which the kneading process has been performed, determining a fiberization state of the binder included in the obtained processed image, and controlling process conditions of the kneading process based on the determined fiberization state of the binder.

## Description

### BACKGROUND

### 1. Field

One or more embodiments of the present disclosure relate to a process of manufacturing an electrode, for example, it relates to a method of kneading an electrode mixture for the manufacture of an electrode, a method of manufacturing a dry electrode film, and a method of manufacturing a dry electrode.

### 2. Description of Related Art

Secondary batteries are batteries that can be charged and discharged. In contrast, primary batteries may not be recharged. Low-capacity secondary batteries are generally used in small portable electronic devices such as smartphones, feature phones, laptop computers, digital cameras, and camcorders, and large-capacity secondary batteries are widely used as motor-driven power sources in hybrid vehicles, electric vehicles, and/or the like, and/or as power storage batteries, and/or the like. Such secondary batteries may include electrodes including a positive electrode and/or a negative electrode, an electrode assembly including the electrodes, a case configured to accommodate the electrode assembly, and electrode terminals connected to the electrode assembly.

With the fast development of battery-using technology, batteries with high capacity are desired and required. For example, a plurality of batteries electrically connected to each other may be used. For example, the batteries may be applied to an electronic device in the form of a battery module including a plurality of batteries (hereinafter referred to as a "battery cell"), and/or a battery pack including a plurality of battery modules. Depending on the implementation, a battery pack may also be configured as a plurality of battery cells. In this case, the electronic device is an electronic device requiring high output and/or high capacity, and may include, for example, an electric vehicle and/or the like.

To efficiently manufacture a battery electrode, research on a dry manufacturing process has been actively conducted. According to the dry manufacturing process, a free-standing type (or kind) dry electrode film may be manufactured using an electrode mixture (e.g., electrode material mixture), and then laminated to a film-shaped substrate to manufacture an electrode. Since the dry manufacturing process does not require a drying process for an electrode active material, problems and issues such as the occurrence of pinholes or cracks in an electrode active material layer during the drying process, or the electrode being bent or damaged due to shrinkage of the substrate, may be avoided.

The electrode mixture for manufacturing a dry electrode may include an electrode active material, a binder, a conductive material, and/or the like. Among these, the binder is fiberized into fine fiber strands by applying a strong shear force during a kneading process, thereby enabling the electrode materials to maintain the form of a free-standing type (or kind) film. Therefore, the fiberization degree of the binder affects the characteristics of the dry electrode film, and ultimately affects the physical properties and performance of the dry electrode including the dry electrode film.

The above-described information disclosed in the background art of the disclosure is only intended to improve understanding of the background of the present disclosure, and thus may also include information that does not constitute the related art.

### SUMMARY

One or more aspects of embodiments of the present disclosure are directed a method of kneading an electrode mixture that is capable of controlling the fiberization state of a binder to improve the characteristics of a dry electrode film, a method of manufacturing a dry electrode film, and a method of manufacturing a dry electrode.

However, technical problems to be solved by the present disclosure are not limited to the problems described above, and other addressed problems and issues not mentioned herein may be clearly understood by those skilled in the art from the description of the present disclosure described hereinbelow. Thus, additional aspects of the present disclosure will be set forth in part in the description which follows and, in part, will be apparent from the description, or may be learned by practice of the presented embodiments of the disclosure.

According to one or more embodiments of the present disclosure, there is provided a method of kneading an electrode mixture including a binder for manufacturing a dry electrode film, the method including: performing a kneading process on the electrode mixture, obtaining a processed image of the electrode mixture on which the kneading process has been performed, determining a fiberization state of the binder included in the obtained processed image, and controlling process conditions of the kneading process based on the determined fiberization state of the binder.

According to one or more embodiments of the present disclosure, the fiberization state of the binder may include a degree to which the binder is transformed into fiber strands. Also, in the determining step, the fiberization state may be determined based on a quantification model for the fiberized binder constructed through machine learning using a learning image for the electrode mixture on which the kneading process has been performed. Here, the quantification model may be constructed using an area and/or a thickness of the fiberized binder included in the learning image, and the fiberization state may be determined in the determining step based on the area and/or the thickness of the fiberized binder included in the processed image.

According to one or more embodiments of the present disclosure, the process conditions may include at least one of a temperature of the kneading process and a performance time (e.g., process time) of the kneading process.

According to one or more embodiments of the present disclosure, the process conditions may include adjusting (e.g., changing) components of a kneader configured to perform the kneading process. Here, the components may include a screw blade of the kneader.

According to one or more embodiments of the present disclosure, the binder may be polytetrafluoroethylene, polyvinylidene fluoride, a polyvinylidene fluoride-hexafluoropropylene copolymer, polyethylene oxide, or a combination thereof.

According to one or more embodiments of the present disclosure, there is provided a method of manufacturing a dry electrode film, the method including: a mixing step (e.g., act or task) of mixing electrode materials including an electrode active material, a binder, and a conductive material to form an electrode mixture, a kneading step (e.g., act or task) of kneading the electrode mixture to fiberize the binder, a crushing step (e.g., act or task) of crushing the kneaded electrode mixture, and a calendering step (e.g., act or task) of forming the crushed electrode mixture into a thin film, wherein the kneading step (e.g., act or task) includes:
performing a kneading process on the electrode mixture, obtaining a processed image of the electrode mixture on which the kneading process has been performed, determining a fiberization state of the binder included in the obtained processed image, and controlling process conditions of the kneading process based on the determined fiberization state of the binder.

According to one or more embodiments of the present disclosure, the fiberization state of the binder may include a degree to which the binder is transformed into fiber strands. Also, in the determining step, the fiberization state may be determined based on a quantification model for the fiberized binder constructed through machine learning using a learning image for the electrode mixture on which the kneading process has been performed. Here, the quantification model may be constructed using an area and/or a thickness of the fiberized binder included in the learning image, and the fiberization state may be determined in the determining step based on the area and/or the thickness of the fiberized binder included in the processed image.

According to one or more embodiments of the present disclosure, the process conditions may include at least one of a temperature of the kneading process and a performance time (e.g., process time) of the kneading process.

According to one or more embodiments of the present disclosure, the process conditions may include adjusting (e.g., changing) components of a kneader configured to perform the kneading process. Here, the components may include a screw blade of the kneader.

According to one or more embodiments of the present disclosure, the binder may be polytetrafluoroethylene, polyvinylidene fluoride, a polyvinylidene fluoride-hexafluoropropylene copolymer, polyethylene oxide, or a combination thereof.

According to one or more embodiments of the present disclosure, there is provided a method of manufacturing a dry electrode, the method including:
manufacturing a dry electrode film using an electrode mixture, and laminating the dry electrode film to a substrate, wherein the manufacturing of the dry electrode film includes: a mixing step (e.g., act or task) of mixing electrode materials including an electrode active material, a binder, and a conductive material the electrode mixture, a kneading step (e.g., act or task) of kneading the electrode mixture to fiberize the binder, a crushing step (e.g., act or task) of crushing the kneaded electrode mixture, and a calendering step (e.g., act or task) of forming the crushed electrode mixture into a thin film, wherein the kneading step (e.g., act or task) includes:
performing a kneading process on the electrode mixture, obtaining a processed image of the electrode mixture on which the kneading process has been performed, determining a fiberization state of the binder included in the obtained processed image, and controlling process conditions of the kneading process based on the determined fiberization state of the binder.

According to one or more embodiments of the present disclosure, the fiberization state of the binder may include a degree to which the binder is transformed into fiber strands, and the fiberization state may be determined in the determining step based on a quantification model for the fiberized binder constructed through machine learning using a learning image for the electrode mixture on which the kneading process has been performed. Also, the quantification model may be constructed using an area and/or a thickness of the fiberized binder included in the learning image, and the fiberization state may be determined in the determining step based on the area and/or the thickness of the fiberized binder included in the processed image.

According to one or more embodiments of the present disclosure, the process conditions may include at least one of a temperature of the kneading process and a performance time (e.g., process time) of the kneading process.

According to one or more embodiments of the present disclosure, when the fiberization degree of the binder (i.e., the degree to which the binder is transformed into fiber strands) is quantified in the process of kneading an electrode mixture for the manufacture of an electrode and the kneading process is controlled based on the fiberization degree of the binder, the characteristics of a dry electrode film may be improved and the quality of an electrode including the same may be enhanced.

According to the present invention there is also provided a system for controlling kneading of an electrode mixture including a binder for manufacturing a dry electrode film, the system comprising a processor configured to control a kneader to perform a kneading process on the electrode mixture, obtain a processed image of the electrode mixture on which the kneading process has been performed, determine a fiberization state of the binder in the obtained processed image, and control process conditions of the kneading process performed by the kneader based on the determined fiberization state of the binder.

According to the present invention there is also provided a computer implemented method for training a quantification model to determine a fiberization state of a binder in an electrode mixture, the method comprising obtaining a set of labelled training images of one or more electrode mixtures on which a kneading process has been performed, wherein each labelled training image identifies one or more characteristics of fiberized binder strands within the corresponding electrode mixture, and training the quantification model based the set of labelled training images to determine the fibrization state of the binder in one or more electrode mixtures.

In some embodiments, each labelled training image identifies the location of fiberized binder strands within the labelled image, and wherein the quantification model is trained to automatically recognize fiberized binder strands within images of electrode mixtures.

In some embodiments, the quantification model is trained to determine, based on an input image of a sampled electrode mixture, one or both of: an area of a fiberized binder of the sampled electrode mixture; and a thickness of the fiberized binder of the sampled electrode mixture, and determine the fiberization state of the sampled electrode mixture based on the one or both of: the area of the fiberized binder of the sampled electrode mixture; and the thickness of the fiberized binder of the sampled electrode mixture.

However, the effects and benefit that can be achieved through the present disclosure are not limited to the effects and benefit described above, and other technical effects and benefit not mentioned herein will be clearly understood by those skilled in the art from the description of the disclosure described hereinbelow.

At least some of the above and other features of the invention are set out in the claims.

### BRIEF DESCRIPTION OF THE DRAWINGS

The accompanying drawings are included to illustrate example embodiments of the present disclosure and serve to facilitate understanding the technical ideas of the present disclosure together with the detailed description of the description provided herein. The above and other objects, features, and advantages of the present disclosure will become more apparent and appreciated to those of ordinary skill in the art from the following descriptions of example embodiments thereof in detail with reference to the accompanying drawings, in which:
FIG. 1 is a diagram schematically showing a cylindrical secondary battery according to one or more embodiments of the present disclosure;
FIG. 2 is a cross-sectional view schematically showing a prismatic secondary battery according to one or more embodiments of the present disclosure;
FIG. 3 is a drawing schematically showing one example of a pouch-type secondary battery according to one or more embodiments of the present disclosure;
FIG. 4 is a drawing schematically showing another example of the pouch-type secondary battery according to one or more embodiments of the present disclosure;
FIG. 5 is a flowchart showing a process for manufacturing a dry electrode film according to one or more embodiments of the present disclosure;
FIG. 6 is a diagram schematically showing one example of the configuration of a kneader that is used in the kneading process in the flowchart of FIG. 5 according to one or more embodiments of the present disclosure;
FIG. 7 is a flowchart showing a method of kneading an electrode mixture according to one or more embodiments of the present disclosure; and
FIG. 8 is a graph showing the relationship between an area of the fiberized binder and a tensile strength of the dry electrode film according to one or more embodiments of the present disclosure.

### DETAILED DESCRIPTION

Hereinafter, one or more embodiments of the present disclosure will be described in detail with reference to the accompanying drawings. Prior to this, terms or words used in the present disclosure and the appended claims should not be interpreted as being limited to ordinary or dictionary meanings and should be interpreted as having meanings and being for concepts consistent with the technical idea of this disclosure based on the principle that the inventor can properly define the concept of the term in order to describe his or her invention in the best way. Accordingly, it is to be understood that the embodiments described herein, and the configurations shown in the drawings are only some example embodiments of the present disclosure and do not illustrate all of the technical ideas of the disclosure, and that there may be various equivalents and modifications that may be replaced for them at the time of filing.

Also, when used herein, the terms "comprise(s)/comprising," "include(s)/including," and/or "has(have)/having" specify the presence of the shapes, numbers, steps, actions, members, elements, and/or groups thereof mentioned and are not intended to exclude the presence or addition of one or more other shapes, numbers, actions, members, elements, and/or groups thereof. Additionally, the terms "comprise(s)/comprising," "include(s)/including," "has(have)/having", or other similar terms include or support the terms "consisting of" and "consisting essentially of," indicating the presence of stated shapes, numbers, steps, actions, members, elements, and/or groups thereof, without or essentially without the presence of other shapes, numbers, steps, actions, members, elements, and/or groups thereof.

Furthermore, in order to aid in understanding the disclosure, the accompanying drawings may not be drawn to scale, and the dimensions of some components may be exaggerated or reduced for clarity. In addition, the same or like reference numbers may be assigned to the same or like components in different embodiments.

The reference that two objects for comparison are 'identical' means 'substantially identical.' Therefore, the term "substantially identical" may include deviations that are considered low in the art, for example, deviations of less than 5%. Also, uniformity of a parameter over a given region may imply uniformity from an average perspective.

Although the terms "first," "second," and/or the like are used to describe various components, these components are not limited thereby. These terms are used to distinguish one component from another component, and unless specifically stated to the contrary, it is to be understood that a first component may be referred as a second component.

Throughout the disclosure, unless otherwise stated, each component may be singular or plural. For example, the singular forms "a," "an," "one," and "the" are intended to include the plural forms as well, unless the context clearly indicates otherwise.

When any component is said to be disposed on the "upper surface (or lower surface)" of a component or "on (or under)" a component, this not only means that any component is disposed (e.g., arranged) in contact with the upper (or lower) surface of the component, but also means that one or more other components may be interposed between the component and any component disposed/arranged on (or under) the component. In contrast, when a part such as a layer, a film, an area, or a plate is described as being "directly on" another part, there is no intervening part present therebetween.

In addition, when a component is described as being "connected," "coupled," or "linked" to another component, the components may be directly connected, coupled or linked to each other, but it should be understood that one or more other components may be "interposed" between respective components, or that each component may be "connected," "coupled," or "linked" through other components.

As used herein, the term "and/or" or "or" may include any and all combinations of one or more of the related items listed herein. Also, the use of the term "may" when describing embodiments of the present disclosure refers to "one or more embodiments of the present disclosure." Expressions such as "one or more" and "at least one" preceding a list of elements modify the list of elements as a whole and do not modify individual elements in the list.

When reference is made to "A and/or B" or "A or B" or "A/B" throughout the disclosure, it means A, B, or A and B unless otherwise particularly stated to the contrary. When it comes to "C to D," it means that it is greater than or equal to C and less than or equal to D unless particularly stated to the contrary.

When a phrase such as "at least one of A, B, and C", "at least one selected from the group of A, B, and C", or "at least one selected from A, B, and C" is used to specify a list of elements A, B, and C, the phrase may refer to any suitable combination.

The term "use" may be considered synonymous with the term "utilize." As used herein, the terms "substantially," "about," and similar terms are used as terms of approximation, not as terms of degree, and are intended to take into account inherent variations in measured or calculated values that would be recognized by a person of ordinary skill in the art.

While the terms such as "first," "second," "third," and the like may be used herein to describe various elements, components, regions, layers, and/or sections, such elements, components, regions, layers, and/or sections are not intended to be limited by such terms. The terms are used to distinguish one element, component, region, layer, or section from another element, component, region, layer, or section. Thus, a first element, component, region, layer, or section discussed below may be named a second element, component, region, layer, or section without departing from the teachings of the presented embodiments.

To describe the relationship of one element or feature to another element(s) or feature(s) as shown in the drawings, spatially relative terms such as "beneath," "below," "lower," "above," "upper," and/or the like may be used herein for ease of description. It will be understood that spatially relative positions are intended to encompass different orientations of the device in use or operation in addition to the orientations depicted in the drawings. For example, when a device in a drawing is inverted, for example, turned upside down, an element described as "below" or "under" another element is understood to be "on" or "above" the other element. Thus, the term "below" may encompass both up and down directions.

The terms used herein are used to describe embodiments of the present disclosure and are not intended to limit the present disclosure.

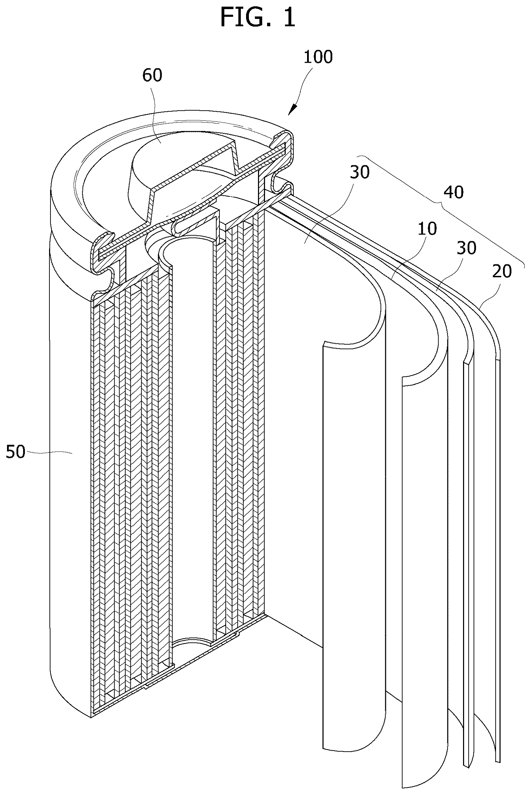

FIGS. 1 to 4 are each a diagram schematically showing a battery according to one or more embodiments of the present disclosure.

### Battery 100

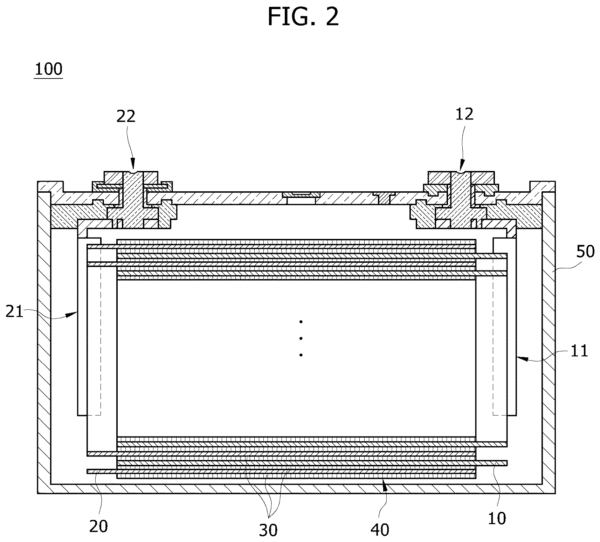

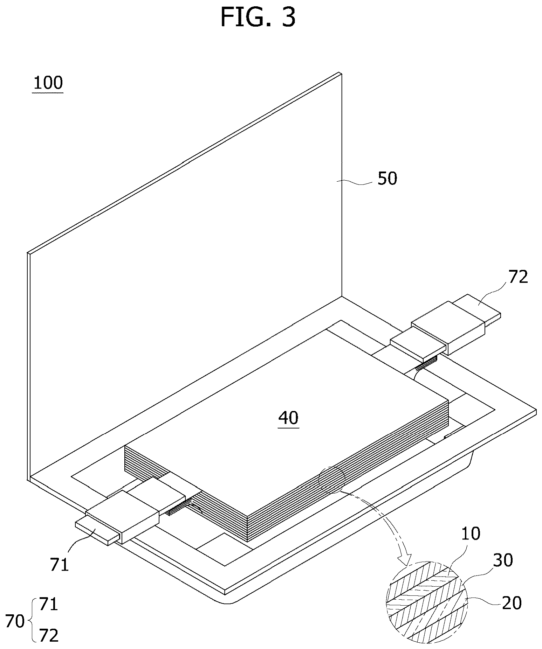

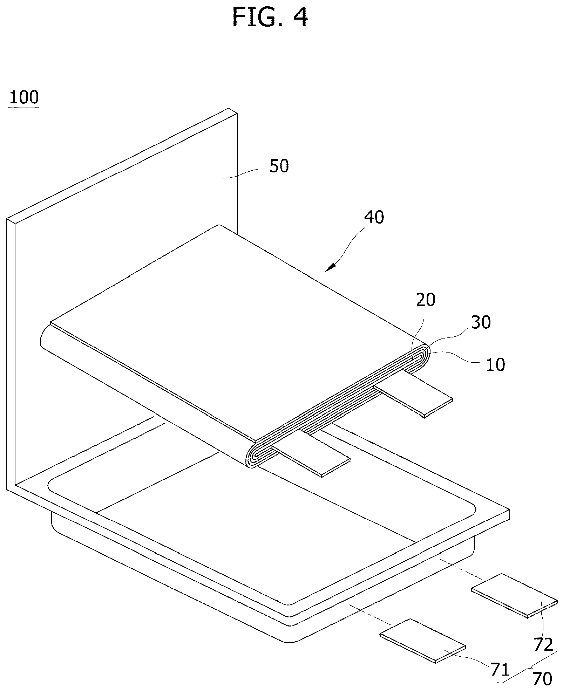

The battery 100 may be classified into a cylindrical type, a square type, a pouch type, a coin type, and/or the like depending on its shape. FIGS. 1 to 4 schematically show batteries according to one or more embodiments of the present disclosure. Here, FIG. 1 shows one example of a cylindrical battery, FIG. 2 shows one example of a prismatic battery, and FIGS. 3 and 4 each show one example of a pouch-type battery. Referring to FIGS. 1 to 4, the battery 100 may include an electrode assembly 40 having a separator 30 interposed between a positive electrode 10 and a negative electrode 20, and a case 50 into which the electrode assembly 40 is accommdated. The positive electrode 10, the negative electrode 20, and the separator 30 may be impregnated with an electrolyte. In one or more embodiments, the battery 100 may include a sealing member 60 configured to seal the case 50 as shown in FIG. 1. In one or more embodiments, as shown in FIG. 2, the battery 100 may include a positive electrode lead tab 11, a positive electrode terminal 12, a negative electrode lead tab 21, and a negative electrode terminal 22. In one or more embodiments, as shown in FIGS. 3 and 4, the battery 100 may include electrode tabs 70, that is, a positive electrode tab 71 and a negative electrode tab 72, which serve as an electrical path for conducting current formed in the electrode assembly 40 to the outside.

### Positive electrode 10

The positive electrode 10 may include a positive electrode current collector (substrate) and a positive electrode active material layer on (e.g., formed on) the positive electrode current collector. The positive electrode active material layer may include a positive electrode active material (e.g., in a form of particles) and may further include a binder and/or a conductive material (e.g., electrically conductive material). In one or more embodiments, the positive electrode 10 may further include an additive that may function as a sacrificial positive electrode.

A content (e.g., amount) of the positive electrode active material may be 90% by weight to 99.5% by weight based on 100% by weight of a total weight of the positive electrode active material layer, and a content (e.g., amount) of the binder and a content (e.g., amount) the conductive material may each be 0.5% by weight to 5% by weight based on 100% by weight of the total weight of the positive electrode active material layer.

A compound capable of reversible intercalation and deintercalation of lithium (lithiated intercalation compound) may be used as the positive electrode active material. In one or more embodiments, at least one selected from among composite oxides of lithium and a metal selected from cobalt, manganese, nickel, and combinations thereof may be used.

The composite oxide may be a lithium transition metal composite oxide, and non-limiting examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

In one or more embodiments, a compound represented by any one selected from the following chemical formulas may be used:

LiₐA_{1-b}X_{b}O_{2-c}D_{c} (0.90 ≤ a ≤ 1.8, 0 ≤ b ≤ 0.5, 0 ≤ c ≤ 0.05); LiₐMn_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}O_{2-α}D_{α} (0.90 ≤ a ≤ 1.8, 0 ≤ b ≤ 0.5, 0 ≤ c ≤ 0.5, 0≤α≤2); LiₐNi_{1-b-c}Mn_{b}X_{c}O_{2-α}D_{α} (0.90 ≤ a ≤ 1.8, 0 ≤ b ≤ 0.5, 0 ≤ c ≤ 0.5, 0≤α≤2); LiₐNi_{b}Co_{c}L¹_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); Li_{(3-f)}Fe₂(PO₄)₃ (0 ≤ f ≤ 2); and LiₐFePO₄ (0.90 ≤ a ≤ 1.8).

In the chemical formulae above, A is nickel (Ni), cobalt (Co), manganese (Mn), or a combination thereof; X is aluminum (Al), Ni, Co, Mn, chromium (Cr), iron (Fe), magnesium (Mg), strontium (Sr), vanadium (V), a rare earth element, or a combination thereof; D is oxygen (O), fluorine (F), sulfur (S), phosphorus (P), or a combination thereof; G is Al, Cr, Mn, Fe, Mg, lanthanum (La), cerium (Ce), Sr, V, or a combination thereof; and L¹ is Mn, Al, or a combination thereof.

In one or more embodiments, the positive electrode active material may be a high-nickel positive electrode active material in which the content of nickel is 80 mol% or more, 85 mol% or more, 90 mol% or more, 91 mol% or more, or 94 mol% or more, and 99 mol% or less, based on 100 mol% of a total metal excluding lithium in the lithium transition metal composite oxide. The high-nickel positive electrode active material may be used to implement high capacity, and thus may be applied to high-capacity, high energy density secondary batteries.

The binder for a dry electrode film is a dry binder that adheres positive electrode active material particles to each other well and allows the positive electrode active material particles to maintain a film form. The dry binder is a polymeric material capable of being fiberized, and may be, for example, polytetrafluoroethylene, polyvinylidene fluoride, a polyvinylidene fluoride-hexafluoropropylene copolymer, polyethylene oxide, or a combination thereof.

The conductive material is used to impart conductivity (e.g., electrical conductivity) to the electrode, and any material may be used as long as it is electronically conductive without causing an undesirable chemical change in the battery to be configured. Non-limiting examples of the conductive material may include carbon-based materials such as natural graphite, artificial graphite, carbon black, acetylene black, Ketjen black, carbon fibers, carbon nanofibers, carbon nanotubes, and/or the like; metal-based materials in the form of metal powder or metal fibers containing one or more of copper, nickel, aluminum, silver, and the like; conductive polymers such as polyphenylene derivatives and the like; or mixtures thereof.

In one or more embodiments, Al foil may be used as the positive electrode current collector, but embodiments of the present invention are not limited thereto.

### Negative electrode 20

The negative electrode 20 for a battery 100 may include a negative electrode current collector (substrate) and a negative electrode active material layer on (e.g., arranged on) the negative electrode current collector. The negative electrode active material layer includes a negative electrode active material (e.g., in a form of particles) and may further include a binder and/or a conductive material (e.g., an electrically conductive material).

For example, in one or more embodiments, the negative electrode active material layer may include 90% by weight to 99.5% by weight of the negative electrode active material, 0.5% by weight to 5% by weight of the binder, and 0% by weight to 5% by weight of the conductive material, based on a total weight of 100 wt% of the negative electrode material layer.

The negative electrode active material may include a material capable of reversible intercalation/deintercalation of lithium ions, lithium metal, an alloy of lithium and a metal, a material capable of doping and dedoping lithium, or a transition metal oxide.

The material capable of reversible intercalation/deintercalation of lithium ions may include a carbon-based negative electrode active material, for example, crystalline carbon, amorphous carbon, or a combination thereof. Non-limiting examples of the crystalline carbon may include graphite such as natural graphite and/or artificial graphite in an amorphous form, a plate-like form, a flaky form, a spherical form, or a fibrous form, and non-limiting examples of the amorphous carbon may include soft carbon or hard carbon, mesophase pitch carbide, calcined coke, and/or the like.

As the alloy of lithium and a metal, an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn) may be used.

As the material capable of doping and dedoping lithium, a Si-based negative electrode active material or a Sn-based negative electrode active material may be used. The Si-based negative electrode active material may be silicon, a silicon-carbon composite, SiOₓ (0 < x ≤ 2), a Si-Q alloy (where Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnOₓ (0 < x ≤ 2) (e.g., SnO₂), a Sn-based alloy, or a combination thereof.

The silicon-carbon composite (e.g., in a form of particles) may be a composite of silicon and amorphous carbon. According to one or more embodiments of the present disclosure, the silicon-carbon composite may be in the form of silicon particles whose surfaces are coated with amorphous carbon. For example, the silicon-carbon composite may include secondary particles (core) in each of which primary particles of silicon are aggregated, and an amorphous carbon coating layer (shell) on (e.g., disposed on) the surface of each secondary particle. The amorphous carbon may also be disposed between the primary particles of silicon, for example, so that the primary particles of silicon may each be coated with amorphous carbon. The secondary particles may be present in a state in which the secondary particles are dispersed in an amorphous carbon matrix.

In one or more embodiments, the silicon-carbon composite may further include crystalline carbon. For example, the silicon-carbon composite may include a core containing crystalline carbon and silicon particles, and an amorphous carbon coating layer on (e.g., disposed on) the surface of the core.

In one or more embodiments, the Si-based negative electrode active material and/or the Sn-based negative electrode active material may be used in combination with the carbon-based negative electrode active material.

The binder for a dry electrode film is a dry binder that adheres negative electrode active material particles to each other well and allows the negative electrode active material particles to maintain a film form. The dry binder is a polymeric material capable of being fiberized, and may be, for example, polytetrafluoroethylene, polyvinylidene fluoride, a polyvinylidene fluoride-hexafluoropropylene copolymer, polyethylene oxide, or a combination thereof.

The conductive material is used to impart conductivity (e.g., electrical conductivity) to the electrode, and any material may be used as long as it is electronically conductive without causing an undesirable chemical change in the battery to be configured. Non-limiting examples of the conductive material may include carbon-based materials such as natural graphite, artificial graphite, carbon black, acetylene black, Ketjen black, carbon fibers, carbon nanofibers, carbon nanotubes, and/or the like; metal-based materials in the form of metal powder or metal fibers containing one or more of copper, nickel, aluminum, silver, and the like; conductive polymers such as polyphenylene derivatives and the like; or mixtures thereof.

As the negative electrode current collector, any one selected from copper foil, nickel foil, stainless steel foil, titanium foil, nickel foam, copper foam, a polymer substrate coated with a conductive metal, and a combination thereof may be used.

### Electrolyte

An electrolyte for a battery 100 may include a non-aqueous organic solvent and a lithium salt.

The non-aqueous organic solvent acts as a medium through which ions involved in an electrochemical reaction of the battery may move. The non-aqueous organic solvent may be a carbonate-based solvent, an ester-based solvent, an ether-based solvent, a ketone-based solvent, an alcohol-based solvent, an aprotic solvent, or a combination thereof.

As the carbonate-based solvent, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and/or the like may be used.

As the ester-based solvent, methyl acetate, ethyl acetate, n-propyl acetate, dimethyl acetate, methyl propionate, ethyl propionate, decanolide, mevalonolactone, valerolactone, caprolactone, and/or the like may be used.

As the ether-based solvent, dibutyl ether, tetraglyme, diglyme, dimethoxyethane, 2-methyltetrahydrofuran, 2,5-dimethyltetrahydrofuran, tetrahydrofuran, and/or the like may be used. Also, cyclohexanone and/or the like may be used as the ketone-based solvent. Ethyl alcohol, isopropyl alcohol, and/or the like may be used as the alcohol-based solvent, and nitriles such as R-CN (wherein R is a linear, branched, or cyclic hydrocarbon group having 2 to 20 carbon atoms and may include a double bond, an aromatic ring, or an ether bond), and/or the like; amides such as dimethylformamide and/or the like; dioxolanes such as 1,3-dioxolane 1,4-dioxolane, and/or the like; sulfolanes, and/or the like may be used as the aprotic solvent.

The non-aqueous organic solvents may be used alone or in combination of two or more thereof.

In one or more embodiments, when the carbonate-based solvent is used, a cyclic carbonate and a chain carbonate may be mixed and used, and the cyclic carbonate and the chain carbonate may be mixed in a volume ratio of 1:1 to 1:9.

The lithium salt is a material that is dissolved in a non-aqueous organic solvent and acts as a source of lithium ions within the battery, thereby enabling the basic operation of a secondary battery and promoting the movement of lithium ions between the positive electrode and the negative electrode. Non-limiting examples of the lithium salt may include one or more selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (where x and y are each an integer from 1 to 20), lithium trifluoromethanesulfonate, lithium tetrafluoroethanesulfonate, lithium difluorobis(oxalato)phosphate (LiDFBOP), and lithium bis(oxalato)borate (LiBOB).

### Separator 30

In one or more embodiments, the battery 100 may include a separator 30 interposed between the positive electrode 10 and the negative electrode 20. Polyethylene, polypropylene, polyvinylidene fluoride, or a multilayer film of two or more layers thereof may be used as the separator 30. In one or more embodiments, a mixed multilayer film such as a polyethylene/polypropylene two-layer separator, a polyethylene/polypropylene/polyethylene three-layer separator, a polypropylene/polyethylene/polypropylene three-layer separator, or the like may also be used.

The separator 30 may include a porous substrate and a coating layer on (e.g., disposed on) one or both (e.g., two opposite) surfaces of the porous substrate and including an organic material, an inorganic material, or a combination thereof.

The porous substrate may be a polymer film formed of any one polymer selected from polyolefins such as polyethylene, polypropylene, and the like, polyesters such as polyethylene terephthalate, polybutylene terephthalate, and the like, polyacetal, polyamide, polyimide, polycarbonate, polyether ketone, polyarylether ketone, polyetherimide, polyamideimide, polybenzimidazole, polyether sulfone, polyphenylene oxide, cyclic olefin copolymers, polyphenylene sulfide, polyethylene naphthalate, glass fibers, and polytetrafluoroethylene (e.g., Teflon), or a copolymer or a mixture of two or more thereof.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but embodiments of the present disclosure are not limited thereto.

The organic and inorganic materials may be present in a state in which the organic material and the inorganic material are mixed in one coating layer, or may be present in a form in which a coating layer including the organic material and a coating layer including the inorganic material are stacked.

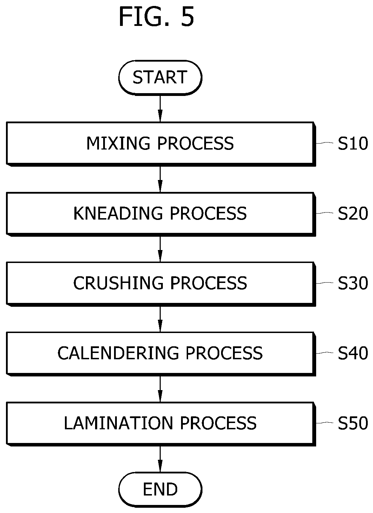

FIG. 5 is a flowchart showing a process of manufacturing a dry electrode film according to one or more embodiments of the present disclosure. Referring to FIG. 5, the process of manufacturing a dry electrode film may include a mixing process (S10), a kneading process (S20), a crushing process (S30), a calendering process (S40), and a lamination process (S50).

In the mixing process (S10), materials for manufacturing a dry electrode film are mixed. For example, in the mixing process (S10), an electrode active material, a binder, and a conductive material may be introduced into a mixer at a predetermined ratio and mixed. As a result of the mixing process (S10), an electrode mixture (e.g., an electrode material mixture) may be prepared. According to one or more embodiments, instead of performing the mixing process (S10) separately, the electrode active material, the binder, and the conductive material may be introduced into an inlet of a kneader configured to perform the kneading process (S20), and may also be mixed during a process of being transferred to the kneading zone.

In the kneading process (S20), a strong shear force is applied to the electrode mixture, which is obtained as a result of the mixing process (S10), to fiberize the binder. In this regard, the electrode mixture is introduced into a screw kneader or an extruder (e.g., a screw extruder), and a shear force of a certain level or higher may be applied to the electrode mixture. As a result of the kneading process (S20), the binder may be fiberized, and the electrode active material and the conductive material may be bound to the fiberized binder.

In the crushing process (S30), the product of the kneading process (S20) is crushed. In this regard, in the crushing process (S30), the bonded product of the fiberized binder, the electrode active material, and the conductive material, that is, the fiberized electrode mixture, may be manufactured into a powder having a smaller size and greater uniformity. In the crushing process (S30), a device called a crusher may be used.

In the calendering process (S40), the crushed electrode mixture is rolled into the form of a film. In this regard, in the calendering process (S40), the crushed electrode mixture is introduced into one or more rolling mills to prepare a thin film. The thickness of the film may be controlled by adjusting the pressure applied by the rolling mills. As a result of the calendering process (S40), a free-standing type (or kind) dry electrode film is prepared.

In the lamination process (S50), the free-standing type (or kind) dry electrode film is laminated by attachment to an electrode current collector or a substrate. In one or more embodiments, an adhesive layer may be formed on a (e.g., one) surface of the electrode current collector so that the free-standing type (or kind) dry electrode film may be attached to the electrode current collector. Then, the electrode current collector to which the free-standing type (or kind) dry electrode film is attached is pressed by a roller and/or the like so that the free-standing type (or kind) dry electrode film may be laminated to the electrode current collector. As a result, the dry electrode is completed. Herein, the electrode current collector or substrate includes a positive electrode current collector or substrate, and a negative electrode current collector or substrate.

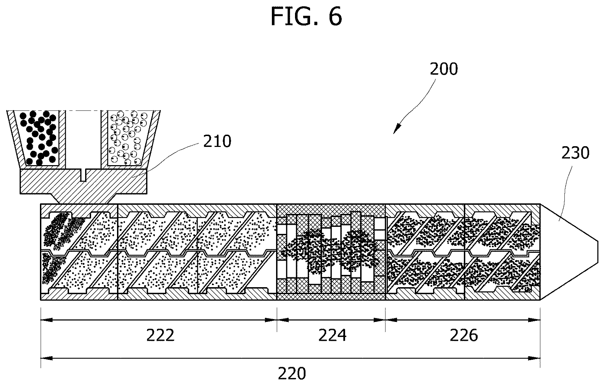

FIG. 6 is a diagram schematically showing one example of a configuration of a kneader that may be used in the kneading process (S20) shown in FIG. 5 according to one or more embodiments. FIG. 6 shows that each powder of the electrode mixture is separately supplied through the inlet 210 of the kneader 200. However, in one or more embodiments, each material may not be introduced separately through the inlet 210 of the kneader 200 shown in FIG. 6, but an electrode mixture mixed in a mixer arranged upstream thereof may also be supplied (see FIG. 5).

Referring to FIG. 6, a kneader 200 may include an inlet 210 and an outlet 230, and a driving unit 220 arranged (e.g., disposed) therebetween. In the driving unit 220, a kneading process may be performed on the electrode mixture supplied through the inlet 210, and the binder fiberized through the kneading process and the electrode active material and the conductive material bound to the binder may be discharged to the outside of the kneader 200 through the outlet 230. In one or more embodiments, the kneader 200 may further include a heater capable of heating the inside of the kneader 200 to adjust a temperature of the kneading process. In one or more embodiments, the kneader 200 may further include a control unit capable of controlling a speed and a temperature of the kneading process.

For example, the materials constituting the electrode mixture, that is, the electrode active material, the binder, and the conductive material, may be introduced separately or introduced as a mixture through the inlet 210 of the kneader 200. The shape of the inlet 210 shown in FIG. 6 is an example, and embodiments of the present disclosure are not limited thereto.

The electrode mixture introduced through the inlet 210 may be transferred to a kneading zone 224 by the rotation of a screw in a first conveying zone 222 of the driving unit 220. The kneading zone 224 may be equipped with a plurality of screw blades, and a shear force of a certain level or higher may be applied to the electrode mixture by the rotation of the plurality of screw blades. Then, the binder in the electrode mixture passing through the kneading zone 224 may be fiberized by the shear force of the screw blades. Also, the remaining electrode materials, that is, the electrode active material and the conductive material, may be bound to the fiberized binder. The binder, which has been fiberized passing through the kneading zone 224, may be transferred through the outlet 230 by the rotation of a screw in a second conveying zone 226, and discharged to the outside.

A controller may control the shear force applied to the electrode mixture in the kneading zone 224 by controlling the process conditions of the kneading process, that is, the rotation speed of the screw blades constituting the extruder, the kneading process temperature (i.e., the temperature of a heater configured to heat the driving unit 220 or at least the kneading zone 224), the kneading process time (i.e., the time that the electrode mixture remains in the kneading zone 224), and the like. As a result, the fiberization state or fiberization degree of the binder prepared through the kneading zone 224 may also be controlled.

The fiberization state of the binder obtained in the kneading zone 224 may affect the characteristics of the dry electrode film manufactured using the binder and the dry electrode including the dry electrode film. For example, If (e.g., when) the fiberization state is not good or not suitable and the thickness of the fiber strands is not sufficiently made fine, the internal resistance may increase and/or the resistance may not be uniform depending on the location, which may result in deteriorated physical properties of the dry electrode including the binder. Therefore, the controller needs to appropriately control the above-described process conditions in the kneading zone 224 so that the fiberization state of the binder reaches a desired level.

The controller may be implemented, for example, through a computer program executable on one or more processors and a recording medium (i.e., a computer-readable recording medium) on which the program is stored. There is no particular limitation on the type of recording medium on which the program is stored, and the program may be permanently or temporarily stored on the recording medium. Also, a computing device equipped with a processor configured to execute the computer program may be connected to the kneader 200, and thus control the operation of the kneader 200 according to previously input commands or commands from a user.

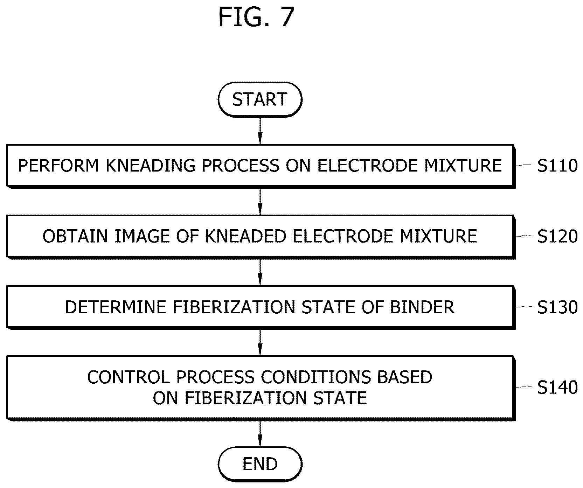

FIG. 7 is a flowchart showing a method of kneading an electrode mixture according to one or more embodiments of the present disclosure. The kneading method shown in FIG. 7 may correspond to, for example, the kneading step (e.g., act or task) in the kneading process S20 of the method of manufacturing a dry electrode shown in FIG. 5. Also, the kneading method shown in FIG. 7 may be, for example, a process performed in the kneader 200 shown in FIG. 6.

Referring to FIG. 7, a kneading process is performed on an electrode mixture (S110). For example, in one or more embodiments, the kneading process may be a process performed in the entire region of the driving unit 220 of the kneader 200 shown in FIG. 6. In one or more embodiments, the kneading process may be, for example, a process performed only in the kneading zone 224 of the kneader 200 shown in FIG. 6. In any case, the kneading process may be performed in the kneading zone 224 under predetermined process conditions, for example, under a kneading process temperature and a kneading process time. As a result of the kneading process (S110), the binder of the electrode mixture is fiberized and converted into a plurality of fiberized strands, and the electrode active material and the conductive material may be bound to the fiberized binder.

Next, an image (processed image) of the electrode mixture (or the kneaded electrode mixture) on which the kneading process of step S110 has been performed is obtained (S120). The obtained image may be, for example, an image taken by a scanning electron microscope (SEM), but embodiments of the present invention are not limited thereto.

Then, a fiberization state of the binder included in the image obtained in step S120 is determined (S130). Here, the fiberization state of the binder may refer to a degree to which the binder is transformed into fine fiber strands as a result of the kneading process in step S110.

Typically, the degree to which the binder is transformed into fiber strands may vary depending on the process conditions in the kneading process (S110), for example, the number, shape, thickness, and rotation speed of the screw blades constituting the extruder, the kneading process temperature (i.e., the temperature of a heater configured to heat the driving unit 220 or at least the kneading zone 224 shown in FIG. 6), and the kneading process time (i.e., the time that the electrode mixture remains in the kneading zone 224 of FIG. 6). In this step, the fiberization state of the binder may be determined under the process conditions under which the kneading process in step S110 has been performed, using an SEM image of the processed binder obtained in step S120.

According to one or more embodiments, the process of determining the fiberization state in step S130 may utilize an image processing technology utilizing artificial intelligence technology, rather than determining with the naked eye using the SEM image. Also, in order to utilize the artificial intelligence technology, the process of determining the fiberization state in step S130 may utilize a quantification model for the fiberized binder that has been constructed in advance through machine learning. That is, the fiberization state of the binder in the image obtained in step S120 may be determined based on the quantification model. Accordingly, objectivity in determining the fiberization state in step S130 may be secured.

As a result, the objectivity in determination may be secured compared to when a worker visually determines the fiberization state using an SEM image. This is because, when the fiberization state is determined with the naked eye, it is difficult to establish objective criteria for determining the fiberization state and the determination of the fiberization state may also vary depending on the worker's subjectivity.

According to one or more embodiments, the quantification model may be, for example, constructed through machine learning using a learning image (e.g., a training image) for the electrode mixture on which the kneading process has been performed. Machine learning may utilize conventional image processing techniques applied for object recognition using images, and the like. For example, the quantification model may be constructed by acquiring a number of images for each sample (an electrode mixture on which the kneading process has been performed under predetermined process conditions), labeling the acquired images, and then performing learning (e.g., training) through machine learning (e.g., any arbitrary artificial intelligence). The accuracy in determination based on the quantification model may be enhanced as the number of learning images and the amount of learning increase.

For example, in order to construct the quantification model, first, as many learning images as possible may be collected. Then, a labeling operation may be performed on the collected learning images. The labeling operation may be, for example, an operation that enables artificial intelligence to recognize fiberized binder strands in the learning images. For instance, the labeling operation may label each image to specify, for each fiberized binder strand, a region within the image occupied by the fiberized binder strand. Through the labeled learning images, the artificial intelligence may recognize the area and/or thickness of the fiberized binder included in the learning images, and thus may construct a quantification model that defines the fiberization state of the binder.

According to one or more embodiments, the quantification method in the quantification model may be performed by recognizing a fiberized binder through image processing and also calculating an area occupied by the fiberized binder. Also, when necessary, the quantification method may be performed by further calculating the thickness of the fiberized binder. According to these embodiments, there is no particular limitation on the image processing technique that may be applied to recognize the fiberized binder and calculate the area and/or thickness of the recognized fiberized binder.

In this way, when the quantification model is constructed using the area and/or thickness of the fiberized binder, the state of the fiberized binder in the processed image in step S130 may be determined using the area and/or thickness of the fiberized binder obtained through image processing of the image to be processed.

For example, when confirming the actual processed image in step S130, the artificial intelligence may automatically recognize the fiberized binder strands to determine the fiberization state of the fiberized binder. For example, the artificial intelligence may recognize the binder strands through image processing technology for the image to be processed. Then, based on the constructed quantification model, the area and/or thickness of the recognized binder strands may be calculated.

Accordingly, in step S130, the fiberization state of the fiberized binder in the processed image may be quantitatively determined based on the established quantification model. For example, a large area and/or a thin thickness of the fiberized binder in the processed image may mean that there are many fiberized binder strands and that the fiberization is fine (e.g., in a suitable and good fiberization state).

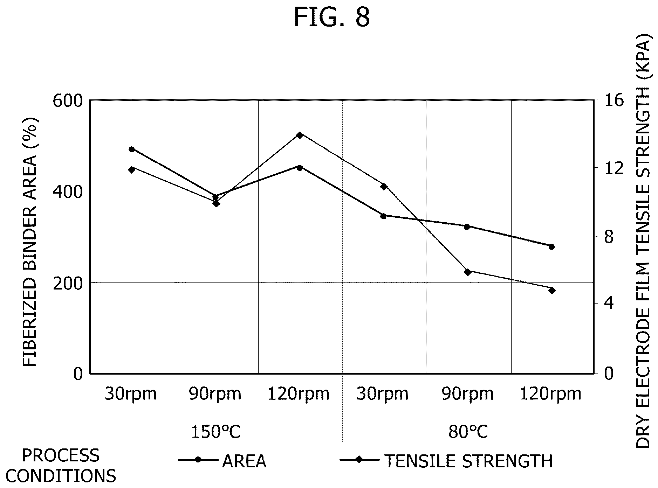

FIG. 8 is a graph showing the relationship between an area of the fiberized binder and a tensile strength of the dry electrode film according to one or more embodiments of the present disclosure. Here, the area of the fiberized binder represents the sum of ratios of the areas of the fiberized binder with respect to the area of the image calculated by artificial intelligence. Also, the left part of FIG. 8 shows the results under the process conditions where the process temperature of the kneading process in step S110 is 150°C, and the right part of FIG. 8 shows the results under the process conditions where the process temperature of the kneading process in step S110 is 80°C. In addition, in each process, the kneading process was performed at extruder rotation speeds of 30 rpm, 90 rpm, and 120 rpm, respectively.

Referring to FIG. 8, it can be seen that there is a similar tendency between the area of the fiberized binder and the tensile strength of the dry electrode film even when the process temperature and/or the rotation speed are different. Accordingly, it can be seen that the quantification model constructed using the area and/or thickness of the fiberized binder in step S130 may be used to objectively determine the properties of the dry electrode film manufactured using the fiberized binder.

Continuing with reference to FIG. 7, the process conditions of the kneading process in step S110 may be controlled based on the result of determination of the fiberization state of the fiberized binder included in the processed image (S140).

For example, if (e.g., when) it is determined that the fiberization state of the binder is insufficient in step S130, the process conditions may be adjusted so that more fiberization may occur in the kneading process of step S110. For example, the process temperature of the kneading process may be increased by increasing the temperature of the heater installed in the kneader 200, and/or the time that the electrode mixture remains in the kneading zone 224 may be increased by decreasing the rotation speed of the screw blades. Alternatively, the configuration of the components of the kneader 200 configured to perform the kneading process, for example, the type and/or rotation speed of the screw blades, may be changed to a configuration in which a stronger shear force is applied.

In contrast, if (e.g., when) the binder is determined to be excessively fiberized in step S130, the process conditions may be adjusted so that less fiberization may occur in the kneading process of step S110. For example, the process temperature of the kneading process may be decreased by decreasing the temperature of the heater installed in the kneader 200, and/or the time that the electrode mixture remains in the kneading zone 224 may be decreased by increasing the rotation speed of the screw blades. Alternatively, the configuration of the components of the kneader 200 configured to perform the kneading process, for example, the type and/or rotation speed of the screw blades, may be changed to a configuration in which a weaker shear force is applied.

As used herein, the term "Group" as utilized herein refers to a group of the Periodic Table of Elements according to the 1 to 18 grouping system of the International Union of Pure and Applied Chemistry ("IUPAC").

It should be understood that, even if the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

A dry electrode film/dry electrode manufacturing device, a battery module, a battery pack, a battery management system (BMS) device, and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP) or a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Although the present disclosure has been described with reference to the embodiments shown in the drawings, these embodiments are illustrative only, and those having ordinary skill in the art will understand that various modifications and other equivalent embodiments are possible therefrom.

Therefore, the scope of technical protection of the present disclosure should be defined by the appended claims and equivalents thereof.

## Claims

1. A method of kneading an electrode mixture including a binder for manufacturing a dry electrode film, the method comprising:
performing a kneading process on the electrode mixture;
obtaining a processed image of the electrode mixture on which the kneading process has been performed;
determining a fiberization state of the binder in the obtained processed image; and
controlling process conditions of the kneading process based on the determined fiberization state of the binder.

2. The method as claimed in claim 1, wherein the fiberization state of the binder comprises a degree to which the binder is transformed into fiber strands.

3. The method as claimed in claim 1 or claim 2, wherein the fiberization state is determined in the determining step based on a quantification model for the fiberized binder constructed through machine learning using a learning image for the electrode mixture on which the kneading process has been performed.

4. The method as claimed in claim 3, wherein the quantification model is constructed using an area and/or a thickness of the fiberized binder in the learning image, and
the fiberization state is determined in the determining step based on an area and/or a thickness of the fiberized binder in the processed image.

5. The method as claimed in any one of the preceding claims, wherein the process conditions comprise at least one of a temperature of the kneading process and a process time of the kneading process.

6. The method as claimed in any one of the preceding claims, wherein controlling the process conditions comprises adjusting components of a kneader configured to perform the kneading process.

7. The method as claimed in claim 6, wherein the components comprise a screw blade of the kneader.

8. The method as claimed in any one of the preceding claims, wherein the binder is polytetrafluoroethylene, polyvinylidene fluoride, a polyvinylidene fluoride-hexafluoropropylene copolymer, polyethylene oxide, or a combination thereof.

9. A method of manufacturing a dry electrode film, the method comprising:
a mixing step of mixing electrode materials including an electrode active material, a binder, and a conductive material to form an electrode mixture;
a kneading step of kneading the electrode mixture to fiberize the binder;
a crushing step of crushing the kneaded electrode mixture; and
a calendering step of forming the crushed electrode mixture into a thin film,
wherein the kneading step comprises the method according to claims 1 to 8.

10. A system for controlling kneading of an electrode mixture including a binder for manufacturing a dry electrode film, the system comprising a processor configured to:
control a kneader to perform a kneading process on the electrode mixture;
obtain a processed image of the electrode mixture on which the kneading process has been performed;
determine a fiberization state of the binder in the obtained processed image; and
control process conditions of the kneading process performed by the kneader based on the determined fiberization state of the binder.

11. A computer implemented method for training a quantification model to determine a fiberization state of a binder in an electrode mixture, the method comprising:
obtaining a set of labelled training images of one or more electrode mixtures on which a kneading process has been performed, wherein each labelled training image identifies one or more characteristics of fiberized binder strands within the corresponding electrode mixture;
training the quantification model based the set of labelled training images to determine the fibrization state of the binder in one or more electrode mixtures.

12. The method of claim 11 wherein each labelled training image identifies the location of fiberized binder strands within the labelled image, and wherein the quantification model is trained to automatically recognize fiberized binder strands within images of electrode mixtures.

13. The method of claim 12 wherein the quantification model is trained to:
determine, based on an input image of a sampled electrode mixture, one or both of: an area of a fiberized binder of the sampled electrode mixture; and a thickness of the fiberized binder of the sampled electrode mixture; and
determine the fiberization state of the sampled electrode mixture based on the one or both of: the area of the fiberized binder of the sampled electrode mixture; and the thickness of the fiberized binder of the sampled electrode mixture.
